# EUROPEAN PATENT APPLICATION

(11) **EP 4 845 009 A1**
(43) Date of publication of application: **25.11.2026**
(21) Application number: 24934596.8
(22) Date of filing: 10.05.2024
(51) Int. Cl.: H02M 3/335

(54) **PHASE-SHIFTED FULL-BRIDGE CONVERTER CONTROL METHOD AND APPARATUS, DEVICE, AND STORAGE MEDIUM**

(30) Priority: 10.04.2024 CN 202410430339
(71) Applicant: Altenergy Power System Inc., Jiaxing, Zhejiang 314050 (CN)
(72) Inventor: MO, Yunjie, Jiaxing, Zhejiang 314050 (CN); YANG, Yongchun, Jiaxing, Zhejiang 314050 (CN); QI, Biaojie, Jiaxing, Zhejiang 314050 (CN); HUA, Guoyong, Jiaxing, Zhejiang 314050 (CN); LUO, Yuhao, Jiaxing, Zhejiang 314050 (CN)
(74) Representative: Müller Schupfner & Partner Patent- und Rechtsanwaltspartnerschaft mbB (Muc)
(86) International application number: PCT/CN2024/092135
(87) International publication number: WO 2025/213520

(57) **Abstract**

A phase-shifted full-bridge converter control method and apparatus, a device, and a storage medium, relating to the technical field of converters. The method comprises: controlling a first switching transistor and a fourth switching transistor to be turned on for a first duration, so that an input direct-current source outputs a current to a phase-shifted full-bridge converter, a first resonant cavity stores energy, a first resonant capacitor is discharged, and a second resonant capacitor is charged; controlling the first switching transistor and the fourth switching transistor to remain turned on for a second duration, so that the input direct-current source outputs a current to an output direct-current source through the phase-shifted full-bridge converter; and controlling the first switching transistor to be turned off, and controlling a second switching transistor and the fourth switching transistor of the phase-shifted full-bridge converter to be turned on for a third duration, so that a second resonant cavity releases energy until the first resonant capacitor is discharged to the lowest resonant voltage and the second resonant capacitor is charged to the highest resonant voltage. According to embodiments of the present application, the input voltage range can be increased, solving the problem of conversion efficiency degradation of the phase-shifted full-bridge converter caused by increasing the turn ratio of the transformer.

## Description

This application claims the priority to Chinese Patent Application No. 202410430339.9, titled "PHASE-SHIFTED FULL-BRIDGE CONVERTER CONTROL METHOD AND APPARATUS, DEVICE, AND STORAGE MEDIUM", filed on April 10, 2024 with the China National Intellectual Property Administration, which is incorporated herein by reference in its entirety.

### FIELD

The present disclosure relates to the technical field of converters, and in particular, to a control method and a control apparatus for a phase-shifted full-bridge converter, a device, and a storage medium.

### BACKGROUND

A phase-shifted full-bridge converter is a soft-switching full-bridge topology, where junction capacitances of power devices and a resonant inductor are used as resonant elements to achieve zero-voltage turn-on and turn-off of primary-side switch transistors of a full-bridge power supply, thereby effectively improving the overall efficiency of the full-bridge power supply. The minimum input voltage of the phase-shifted full-bridge converter is affected by a turns ratio of a transformer. To obtain a low input voltage limit to ensure a wide operating voltage range, the turns ratio of the transformer is increased, which significantly reduces the conversion efficiency of the phase-shifted full-bridge converter.

Therefore, how to increase the input voltage range without reducing the conversion efficiency is a technical issue to be addressed by those skilled in the art.

### SUMMARY

In view of this, an objective of the present disclosure is to provide a control method and a control apparatus for a phase-shifted full-bridge converter, a device, and a storage medium, so as to increase the input voltage range, improve the boost ratio of the phase-shifted full-bridge converter, and address the issue of reducing the conversion efficiency of the phase-shifted full-bridge converter due to increasing the turns ratio of the transformer. The specific technical solutions are described as follows.

In a first aspect, a control method for a phase-shifted full-bridge converter is provided according to the present disclosure. The phase-shifted full-bridge converter comprises a first switch transistor, a second switch transistor, a third switch transistor, a fourth switch transistor, a transformer, a first transistor, a second transistor, a first parallel capacitor, a second parallel capacitor, a first resonant capacitor, and a second resonant capacitor, an initial state of the first switch transistor and an initial state of the fourth switch transistor in each operation cycle of the phase-shifted full-bridge converter are on, and an initial state of the second switch transistor and an initial state of the third switch transistor in each operation cycle of the phase-shifted full-bridge converter are off.

The method comprises:
controlling the first switch transistor and the fourth switch transistor to be on for a first duration, to enable that an input direct-current source outputs a current to the phase-shifted full-bridge converter, a first resonant cavity stores power, the first resonant capacitor discharges, and the second resonant capacitor is charged, where the first resonant cavity comprises a leakage inductance of the transformer, a magnetizing inductance of the transformer, the first parallel capacitor, the second parallel capacitor, the first resonant capacitor, and the second resonant capacitor;
controlling the first switch transistor and the fourth switch transistor to continue to be on for a second duration, to enable that the input direct-current source outputs a current to an output direct-current source through the phase-shifted full-bridge converter, and the first parallel capacitor and the second parallel capacitor stop resonating; and
controlling the first switch transistor to be off, and controlling the second switch transistor and the fourth switch transistor to be on for a third duration, to enable that a second resonant cavity releases power until the first resonant capacitor discharges to a minimum resonant voltage and the second resonant capacitor is charged to a maximum resonant voltage, where the second resonant cavity comprises the leakage inductance, the magnetizing inductance, the first resonant capacitor, and the second resonant capacitor.

In a possible implementation, after controlling the first switch transistor to be off, and controlling the second switch transistor and the fourth switch transistor to be on for the third duration, the control method further comprises:
controlling the fourth switch transistor to be off, and controlling the second switch transistor and the third switch transistor to be on for a fourth duration, to enable that the input direct-current source outputs a current to the phase-shifted full-bridge converter, the first resonant cavity stores power, the first resonant capacitor is charged, and the second resonant capacitor discharges;
controlling the second switch transistor and the third switch transistor to continue to be on for a fifth duration, to enable that the input direct-current source outputs a current to the output direct-current source through the phase-shifted full-bridge converter, and the first parallel capacitor and the second parallel capacitor stop resonating; and
controlling the second switch transistor to be off, and controlling the first switch transistor and the third switch transistor to be on for a sixth duration, to enable that the second resonant cavity releases power until the first resonant capacitor is charged to the maximum resonant voltage and the second resonant capacitor discharges to the minimum resonant voltage.

In a possible implementation, the method further comprises:
determining a phase-shift duration of the phase-shifted full-bridge converter based on the operation cycle and an effective turn-on duration of the phase-shifted full-bridge converter.

In a possible implementation, the method further comprises:
determining an effective turn-on duration of the phase-shifted full-bridge converter based on an input voltage of the phase-shifted full-bridge converter, an output voltage of the phase-shifted full-bridge converter, an inductance value of the leakage inductance, an inductance value of the magnetizing inductance, a turns ratio of the transformer, a capacitance of the first parallel capacitor, a capacitance of the second parallel capacitor, a capacitance of the first resonant capacitor, a capacitance of the second resonant capacitor, and the operation cycle.

In a possible implementation, the first switch transistor, the second switch transistor, the third switch transistor, and the fourth switch transistor are metal-oxide-semiconductor field-effect transistors each having a body diode and a parasitic capacitance.

In a second aspect, a control apparatus for a phase-shifted full-bridge converter is provided according to the present disclosure. The phase-shifted full-bridge converter comprises a first switch transistor, a second switch transistor, a third switch transistor, a fourth switch transistor, a transformer, a first transistor, a second transistor, a first parallel capacitor, a second parallel capacitor, a first resonant capacitor, and a second resonant capacitor, an initial state of the first switch transistor and an initial state of the fourth switch transistor in each operation cycle of the phase-shifted full-bridge converter are on, and an initial state of the second switch transistor and an initial state of the third switch transistor in each operation cycle of the phase-shifted full-bridge converter are off.

The control apparatus comprises:
a first control module, configured to control the first switch transistor and the fourth switch transistor to be on for a first duration, to enable that an input direct-current source outputs a current to the phase-shifted full-bridge converter, a first resonant cavity stores power, the first resonant capacitor discharges, and the second resonant capacitor is charged, wherein the first resonant cavity comprises a leakage inductance of the transformer, a magnetizing inductance of the transformer, the first parallel capacitor, the second parallel capacitor, the first resonant capacitor, and the second resonant capacitor;
a second control module, configured to control the first switch transistor and the fourth switch transistor to continue to be on for a second duration, to enable that the input direct-current source outputs a current to an output direct-current source through the phase-shifted full-bridge converter, and the first parallel capacitor and the second parallel capacitor stop resonating; and
a third control module, configured to control the first switch transistor to be off, and control the second switch transistor and the fourth switch transistor to be on for a third duration, to enable that a second resonant cavity releases power until the first resonant capacitor discharges to a minimum resonant voltage and the second resonant capacitor is charged to a maximum resonant voltage, wherein the second resonant cavity comprises the leakage inductance, the magnetizing inductance, the first resonant capacitor, and the second resonant capacitor.

In a possible implementation, the apparatus further comprises:
a fourth control module, configured to control the fourth switch transistor to be off, and control the second switch transistor and the third switch transistor to be on for a fourth duration, to enable that the input direct-current source outputs a current to the phase-shifted full-bridge converter, the first resonant cavity stores power, the first resonant capacitor is charged, and the second resonant capacitor discharges;
a fifth control module, configured to control the second switch transistor and the third switch transistor to continue to be on for a fifth duration, to enable that the input direct-current source outputs a current to the output direct-current source through the phase-shifted full-bridge converter, and the first parallel capacitor and the second parallel capacitor stop resonating; and
a sixth control module, configured to control the second switch transistor to be off, and control the first switch transistor and the third switch transistor to be on for a sixth duration, to enable that the second resonant cavity releases power until the first resonant capacitor is charged to the maximum resonant voltage and the second resonant capacitor discharges to the minimum resonant voltage.

In a possible implementation, the apparatus further comprises:
a phase-shift duration determination module, configured to determine a phase-shift duration of the phase-shifted full-bridge converter based on the operation cycle and an effective turn-on duration of the phase-shifted full-bridge converter.

In a third aspect, a computer device is provided according to the present disclosure, including a memory and a processor, where
the memory is configured to store a computer program; and
the processor is configured to execute the computer program in the memory to implement the method according to the first aspect or any one of the implementations of the first aspect.

In a fourth aspect, a computer-readable storage medium is provided according to the present disclosure. The computer-readable storage medium stores instructions, and the instructions, when executed on a computer, cause the computer to execute the method according to the first aspect or any one of the implementations of the first aspect.

In the embodiments of the present disclosure, the first switch transistor and the fourth switch transistor are controlled to be on for the first duration, so that the input direct-current source outputs a current to the phase-shifted full-bridge converter, the first resonant cavity stores power, the first resonant capacitor discharges, and the second resonant capacitor is charged. The first switch transistor and the fourth switch transistor are further controlled to continue to be on for the second duration, so that the input direct-current source outputs a current to the output direct-current source through the phase-shifted full-bridge converter, and the first parallel capacitor and the second parallel capacitor stop resonating. The first switch transistor is controlled to be off, and the second switch transistor and the fourth switch transistor of the phase-shifted full-bridge converter are controlled to be on for the third duration, so that the second resonant cavity releases power until the first resonant capacitor discharges to the minimum resonant voltage and the second resonant capacitor is charged to the maximum resonant voltage. In the embodiments of the present disclosure, the resonant cavity including the first parallel capacitor and the second parallel capacitor is adopted to store power. When the first parallel capacitor and the second parallel capacitor stop resonating, the resonant cavity is adopted to release power. When releasing power, the resonant cavity superimposes the input voltage and supplies power to the transformer simultaneously, which can increase the input voltage range, improve the boost ratio of the phase-shifted full-bridge converter, and address the issue of reducing the conversion efficiency of the phase-shifted full-bridge converter due to increasing the turns ratio of the transformer.

### BRIEF DESCRIPTION OF THE DRAWINGS

To more clearly illustrate the technical solutions in the embodiments of the present disclosure or in the prior art, the drawings required for describing the embodiments or the prior art will be briefly introduced below. Obviously, the drawings described below are only some embodiments of the present disclosure. For those ordinarily skilled in the art, other drawings may be obtained based on these drawings without any creative effort.
FIG. 1 is a circuit schematic diagram of an existing phase-shifted full-bridge converter according to an embodiment of the present disclosure;
FIG. 2 is a circuit schematic diagram of a phase-shifted full-bridge converter according to an embodiment of the present disclosure;
FIG. 3 is a flow chart of a control method for a phase-shifted full-bridge converter according to an embodiment of the present disclosure;
FIG. 4 is a current flow schematic diagram of a phase-shifted full-bridge converter in a first mode according to an embodiment of the present disclosure;
FIG. 5 is a current flow schematic diagram of a phase-shifted full-bridge converter in a second mode according to an embodiment of the present disclosure;
FIG. 6 is a current flow schematic diagram of a phase-shifted full-bridge converter in a third mode according to an embodiment of the present disclosure;
FIG. 7 is a main waveform schematic diagram of a phase-shifted full-bridge converter according to an embodiment of the present disclosure; and
FIG. 8 is a schematic structural diagram of a control apparatus for a phase-shifted full-bridge converter according to an embodiment of the present disclosure.

### DETAILED DESCRIPTION

To make the objects, technical solutions, and advantages of the embodiments of the present disclosure clearer, the technical solutions in the embodiments of the present disclosure will be clearly and completely described below in conjunction with the drawings in the embodiments of the present disclosure. Obviously, the described embodiments are only a part of the embodiments of the present disclosure, rather than all of the embodiments. Based on the embodiments in the present disclosure, all other embodiments obtained by those ordinarily skilled in the art without any creative effort shall fall within the protection scope of the present disclosure.

Through the phase-shifted full-bridge technology, the freewheeling current of the transformer leakage inductance as well as the body diodes and parasitic capacitances of metal-oxide-semiconductor field-effect transistors (MOSFETs) are utilized to achieve zero-voltage switch (ZVS) control of the leading bridge arm of the phase-shifted full-bridge converter. Meanwhile, the freewheeling current of the transformer leakage inductance is utilized to achieve zero-current switch (ZCS) control of the lagging bridge arm of the phase-shifted full-bridge converter, and the natural turn-off of the rectifier diode on the secondary side of the transformer enables soft-switching ZCS. When all the rectifier diodes on the secondary side are turned off, no current flows therethrough, and the phase-shifted full-bridge converter stops power conversion. However, the minimum input voltage of the phase-shifted full-bridge converter is affected by the turns ratio of the transformer. To ensure a wide operating voltage range, the turns ratio of the transformer is currently increased to obtain a low input voltage, which significantly reduces the conversion efficiency of the phase-shifted full-bridge converter.

Therefore, a control method for a phase-shifted full-bridge converter is provided according to the present disclosure, to achieve the capability of reducing the minimum operating voltage, increasing the input voltage range, and improving the boost ratio and conversion efficiency of the phase-shifted full-bridge converter topology.

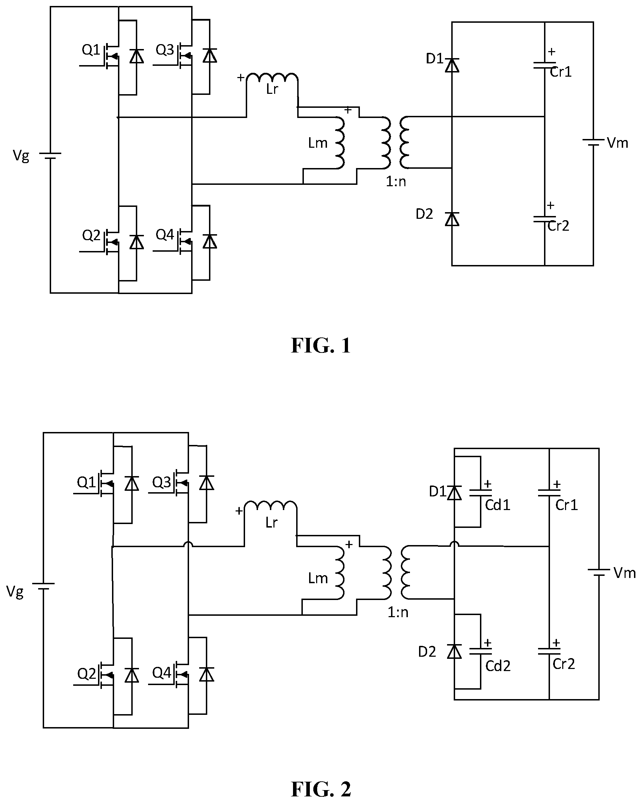

An existing phase-shifted full-bridge converter is shown in FIG. 1. Vg represents an input direct-current source, and Vm represents an output direct-current source. Q1, Q2, Q3, and Q4, four MOSFETs, constitute a single-phase full-bridge circuit on a primary side of a transformer. Lr represents a primary-side leakage inductance of the transformer, and a left side of Lr is a positive voltage direction. Lm represents a primary-side magnetizing inductance of the transformer, and an upper side of Lm is the positive voltage direction. 1:n represents a primary-to-secondary turns ratio of the transformer, a left side of the transformer represents the primary side of the transformer, and a right side of the transformer represents a secondary side of the transformer. D1 and D2 represent rectifier diodes. Cr1 and Cr2 represent resonant capacitors, and upper sides of the capacitors are the positive voltage direction.

Based on FIG. 1, the phase-shifted full-bridge converter of the embodiment of the present disclosure is obtained, as shown in FIG. 2. The phase-shifted full-bridge converter according to the embodiment of the present disclosure includes an input direct-current source Vg, an output direct-current source Vm, a primary-side full-bridge circuit, a transformer, a first transistor D1, a second transistor D2, a first parallel capacitor Cd1, a second parallel capacitor Cd2, a first resonant capacitor Cr1 and a second resonant capacitor Cr2. The primary-side full-bridge circuit of the phase-shifted full-bridge converter is composed of a first switch transistor Q1, a second switch transistor Q2, a third switch transistor Q3 and a fourth switch transistor Q4. The switch transistors are typically MOSFETs (also referred to as MOS transistors) each having a body diode and a parasitic capacitance. The first transistor D1 and the second transistor D2 may be rectifier diodes, or other devices capable of implementing the same function, such as MOS transistors.

The phase-shifted full-bridge converter includes a leading bridge arm and a lagging bridge arm. The leading bridge arm includes the first switch transistor Q1 and the second switch transistor Q2, and the lagging bridge arm includes the third switch transistor Q3 and the fourth switch transistor Q4.

A first output terminal of the primary-side full-bridge circuit is connected to a first terminal of a leakage inductance Lr of the transformer. A second terminal of the leakage inductance Lr is connected to a first terminal of a primary side of the transformer. A second output terminal of the primary-side full-bridge circuit is connected to a second terminal of the primary side of the transformer. A magnetizing inductance Lm of the transformer is connected in parallel across both terminals of the primary side of the transformer. A first terminal of a secondary side of the transformer is connected to a first terminal of the first resonant capacitor Cr1 and a first terminal of the second resonant capacitor Cr2. A second terminal of the first resonant capacitor Cr1 is connected to a cathode of the first transistor D1. An anode of the first transistor D1 is connected to a cathode of the second transistor D2. A second terminal of the secondary side of the transformer is connected to the cathode of the second transistor D2. An anode of the second transistor D2 is connected to a second terminal of the second resonant capacitor Cr2. The first parallel capacitor Cd1 is connected in parallel across both terminals of the first transistor D1, and the second parallel capacitor Cd2 is connected in parallel across both terminals of the second transistor D2.

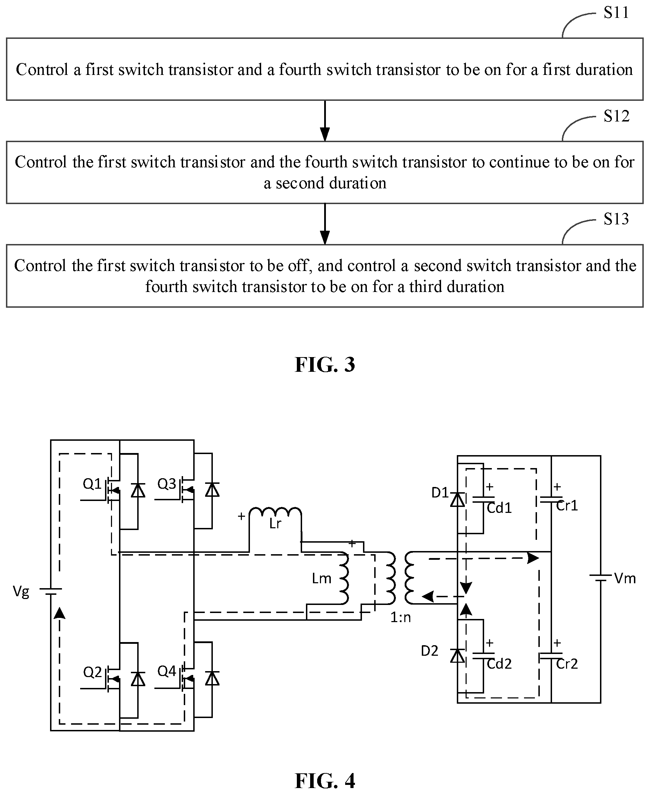

Reference is made to FIG. 3, which is a flow chart of a control method for a phase-shifted full-bridge converter according to an embodiment of the present disclosure. The embodiment of the present disclosure at least includes the following steps S11 to S13.

In step S11, the first switch transistor Q1 and the fourth switch transistor Q4 are controlled to be on for a first duration.

In the embodiment of the present disclosure, an initial state of the first switch transistor Q1 and an initial state of the fourth switch transistor Q4 in each operation cycle of the phase-shifted full-bridge converter are on, and an initial state of the second switch transistor Q2 and an initial state of the third switch transistor Q3 in each operation cycle of the phase-shifted full-bridge converter are off.

In each operation cycle, the first switch transistor Q1 and the fourth switch transistor Q4 are controlled to be on for the first duration, so that the input direct-current source Vg outputs a current to the phase-shifted full-bridge converter, a primary-side current of the transformer increases, the first parallel capacitor Cd1 is charged, that is, a voltage of the first parallel capacitor Cd1 increases, the second parallel capacitor Cd2 discharges, that is, a voltage of the second parallel capacitor Cd2 decreases, the first resonant capacitor Cr1 discharges, that is, a voltage of the first resonant capacitor Cr1 decreases, and the second resonant capacitor Cr2 is charged, that is, a voltage of the second resonant capacitor Cr2 increases, until the voltage of the first parallel capacitor Cd1 is increased to an output voltage Um, and the voltage of the second parallel capacitor Cd2 is reduced to 0. In this process, the input direct-current source Vg and the phase-shifted full-bridge converter do not output a current to the output direct-current source Vm, the first transistor D1 enters an off state, the leakage inductance Lr, the magnetizing inductance Lm, the first parallel capacitor Cd1, the second parallel capacitor Cd2, the first resonant capacitor Cr1 and the second resonant capacitor Cr2 simultaneously participate in resonance, and a first resonant cavity formed by the leakage inductance Lr, the magnetizing inductance Lm, the first parallel capacitor Cd1, the second parallel capacitor Cd2, the first resonant capacitor Cr1 and the second resonant capacitor Cr2 stores power.

During the stage where the first switch transistor Q1 and the fourth switch transistor Q4 are on for the first duration, both the first transistor D1 and the second transistor D2 are in the off state until the second parallel capacitor Cd2 discharges to a voltage of 0, and then the second transistor D2 is turned on.

In step S12, the first switch transistor Q1 and the fourth switch transistor Q4 are controlled to continue to be on for a second duration.

After controlling the first switch transistor Q1 and the fourth switch transistor Q4 to be on for the first duration, the first switch transistor Q1 and the fourth switch transistor Q4 are controlled to continue to be on for the second duration, so that the input direct-current source Vg outputs a current to the output direct-current source Vm through the phase-shifted full-bridge converter. The first transistor D1 remains in the off state, the voltage of the first parallel capacitor Cd1 is the output voltage Um, the voltage of the second parallel capacitor Cd2 is 0, the second transistor D2 is in an on state, the voltage of the first resonant capacitor Cr1 continues to decrease, and the voltage of the second resonant capacitor Cr2 continues to increase. In this process, the first parallel capacitor Cd1 and the second parallel capacitor Cd2 stop resonating under the clamping effect of the transistor voltages, the leakage inductance Lr, the magnetizing inductance Lm, the first resonant capacitor Cr1 and the second resonant capacitor Cr2 simultaneously participate in resonance, and a second resonant cavity formed by the leakage inductance Lr, the magnetizing inductance Lm, the first resonant capacitor Cr1 and the second resonant capacitor Cr2 both stores power and releases power.

In step S13, the first switch transistor Q1 is controlled to be off, and the second switch transistor Q2 and the fourth switch transistor Q4 are controlled to be on for a third duration.

After controlling the first switch transistor Q1 and the fourth switch transistor Q4 to be on for the second duration, the first switch transistor Q1 is controlled to be off, the second switch transistor Q2 is controlled to be on, and the second switch transistor Q2 and the fourth switch transistor Q4 are controlled to be on for the third duration, so that the second resonant cavity releases power, the primary-side current of the transformer decreases, the voltage of the first resonant capacitor Cr1 continues to decrease, and the voltage of the second resonant capacitor Cr2 continues to increase, until the primary-side current of the transformer is 0, the first resonant capacitor Cr1 discharges to a minimum resonant voltage, and the second resonant capacitor Cr2 is charged to a maximum resonant voltage. In this process, the input direct-current source Vg does not provide an input current to the phase-shifted full-bridge converter, and the second resonant cavity provides the current to the phase-shifted full-bridge converter. The first switch transistor Q1 is turned off. Since the current of the leakage inductance Lr cannot change abruptly, the second switch transistor Q2 is turned on at this time, and zero-voltage turn-on is achieved for the second switch transistor Q2.

When the first resonant capacitor Cr1 discharges to the minimum resonant voltage, and the second resonant capacitor Cr2 is charged to the maximum resonant voltage, both the primary-side current of the transformer and a current of the second transistor D2 freewheel to 0, so that the second transistor D2 enters the off state.

In the embodiments of the present disclosure, the first switch transistor and the fourth switch transistor are controlled to be on for the first duration, so that the input direct-current source outputs a current to the phase-shifted full-bridge converter, the first resonant cavity stores power, the first resonant capacitor discharges, and the second resonant capacitor is charged. The first switch transistor and the fourth switch transistor are further controlled to continue to be on for the second duration, so that the input direct-current source outputs a current to the output direct-current source through the phase-shifted full-bridge converter, and the first parallel capacitor and the second parallel capacitor stop resonating. The first switch transistor is controlled to be off, and the second switch transistor and the fourth switch transistor of the phase-shifted full-bridge converter are controlled to be on for the third duration, so that the second resonant cavity releases power until the first resonant capacitor discharges to the minimum resonant voltage, and the second resonant capacitor is charged to the maximum resonant voltage. In the embodiments of the present disclosure, the resonant cavity including the first parallel capacitor and the second parallel capacitor is adopted to store power. When the first parallel capacitor and the second parallel capacitor stop resonating, the resonant cavity is adopted to release power. When releasing power, the resonant cavity superimposes an input voltage and supplies power to the transformer simultaneously, which can increase the input voltage range, improve the boost ratio of the phase-shifted full-bridge converter, and address the issue of reducing the conversion efficiency of the phase-shifted full-bridge converter due to increasing the turns ratio of the transformer.

The above describes the first half of each operation cycle. Next, the second half of the operation cycle is introduced.

In step S21, the fourth switch transistor Q4 is controlled to be off, and the second switch transistor Q2 and the third switch transistor Q3 are controlled to be on for a fourth duration.

After controlling the second switch transistor Q2 and the fourth switch transistor Q4 to be on for the third duration, the fourth switch transistor Q4 is controlled to be off, the third switch transistor Q3 is controlled to be on, and the second switch transistor Q2 and the third switch transistor Q3 are controlled to be on for the fourth duration, so that the input direct-current source Vg outputs a current to the phase-shifted full-bridge converter, the first resonant cavity stores power, the first parallel capacitor Cd1 discharges, the second parallel capacitor Cd2 is charged, the first resonant capacitor Cr1 is charged, and the second resonant capacitor Cr2 discharges, until the voltage of the first parallel capacitor Cd1 is 0, and the voltage of the second parallel capacitor Cd2 is the output voltage Um. When the voltage of the first parallel capacitor Cd1 is 0, the first transistor D1 is in the on state. When the fourth switch transistor Q4 is turned off, zero-current turn-off is achieved for the fourth switch transistor Q4.

During the stage where the second switch transistor Q2 and the third switch transistor Q3 are on for the fourth duration, both the first transistor D1 and the second transistor D2 are in the off state until the first parallel capacitor Cd1 discharges to a voltage of 0, and then the first transistor D1 is turned on.

In step S22, the second switch transistor Q2 and the third switch transistor Q3 are controlled to continue to be on for a fifth duration.

After controlling the second switch transistor Q2 and the third switch transistor Q3 to be on for the fourth duration, the second switch transistor Q2 and the third switch transistor Q3 are controlled to continue to be on for the fifth duration, so that the input direct-current source Vg outputs a current to the output direct-current source Vm through the phase-shifted full-bridge converter, the first resonant capacitor Cr1 continues to be charged, and the second resonant capacitor Cr2 continues to discharges. In this process, the first transistor D1 remains in the on state, the second transistor D2 remains in the off state, the first parallel capacitor Cd1 and the second parallel capacitor Cd2 stop resonating under the clamping effect of the transistor voltages, the leakage inductance Lr, the magnetizing inductance Lm, the first resonant capacitor Cr1 and the second resonant capacitor Cr2 simultaneously participate in resonance, and the second resonant cavity formed by the leakage inductance Lr, the magnetizing inductance Lm, the first resonant capacitor Cr1 and the second resonant capacitor Cr2 both stores power and releases power.

In step S23, the second switch transistor Q2 is controlled to be off, and the first switch transistor Q1 and the third switch transistor Q3 are controlled to be on for a sixth duration.

After controlling the second switch transistor Q2 and the third switch transistor Q3 to be on for the fifth duration, the second switch transistor Q2 is controlled to be off, the first switch transistor Q1 is controlled to be on, and the first switch transistor Q1 and the third switch transistor Q3 are controlled to be on for the sixth duration, so that the leakage inductance Lr of the transformer releases power, the primary-side current of the transformer decreases, the first resonant capacitor Cr1 continues to be charged, and the second resonant capacitor Cr2 continues to discharges, until the primary-side current of the transformer is 0, the first resonant capacitor Cr1 is charged to the maximum resonant voltage, and the second resonant capacitor Cr2 discharges to the minimum resonant voltage.

When the first resonant capacitor Cr1 is charged to the maximum resonant voltage, and the second resonant capacitor Cr2 discharges to the minimum resonant voltage, both the primary-side current of the transformer and the current of the first transistor D1 freewheel to 0, so that the first transistor D1 enters the off state.

A time period from a time instant t0 to a time instant t6 is one operation cycle of the phase-shifted full-bridge converter. The control method is described below according to different modes within one operation cycle.

Each operation cycle T includes 6 modes, namely a first mode (time instant t0 to time instant t1), a second mode (time instant t1 to time instant t2), a third mode (time instant t2 to time instant t3), a fourth mode (time instant t3 to time instant t4), a fifth mode (time instant t4 to time instant t5), and a sixth mode (time instant t5 to time instant t6).

At the time instant t0, the phase-shifted full-bridge converter completes commutation, and the first switch transistor Q1 and the fourth switch transistor Q4 are turned on.

During the stage from t0 to t1, the primary-side current of the transformer starts from zero, flows forward through the first switch transistor Q1, the leakage inductance Lr, a primary-side coil of the transformer, and the fourth switch transistor Q4, and continuously increases, with the current flow direction shown in FIG. 4. The first transistor D1 enters the off state, the voltage of the first parallel capacitor Cd1 increases from zero, the first parallel capacitor Cd1 is charged, the voltage of the second parallel capacitor Cd2 decreases from the output voltage Um, and the second parallel capacitor Cd2 discharges. The voltage of the first resonant capacitor Cr1 decreases from the maximum resonant voltage, the first resonant capacitor Cr1 discharges, the voltage of the second resonant capacitor Cr2 increases from the minimum resonant voltage, and the second resonant capacitor Cr2 is charged.

At the time instant t1, the voltage of the first parallel capacitor Cd1 is charged to the output voltage Um, the voltage of the second parallel capacitor Cd2 discharges to 0, and the second transistor D2 is turned on.

In the first mode, the phase-shifted full-bridge converter does not output a current to the output direct-current source Vm, and the leakage inductance Lr, the magnetizing inductance Lm, the first parallel capacitor Cd1, the second parallel capacitor Cd2, the first resonant capacitor Cr1 and the second resonant capacitor Cr2 simultaneously participate in resonance.

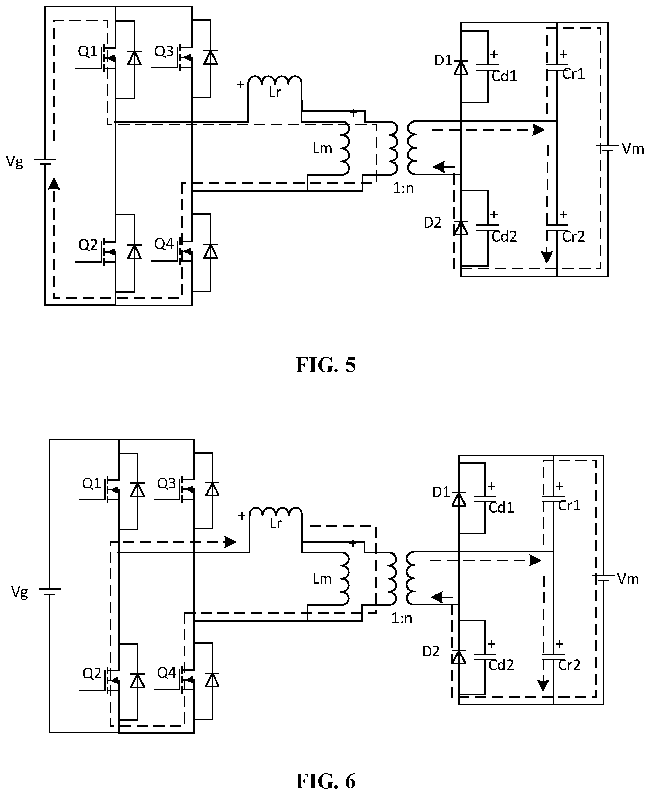

During the stage from t1 to t2, the first switch transistor Q1 and the fourth switch transistor Q4 are on, and the primary-side current of the transformer flows forward through the first switch transistor Q1, the leakage inductance Lr, the transformer, and the fourth switch transistor Q4, with the current flow direction shown in FIG. 5. The first transistor D1 remains in the off state, the voltage of the first parallel capacitor Cd1 is the output voltage Um, the voltage of the second parallel capacitor Cd2 is zero, and the second transistor D2 remains in the on state. The voltage of the first resonant capacitor Cr1 continuously decreases, the first resonant capacitor Cr1 discharges, the voltage of the second resonant capacitor Cr2 continuously increases, and the second resonant capacitor Cr2 is charged.

In the second mode, the input direct-current source Vg and the phase-shifted full-bridge converter output a current to the output direct-current source Vm. Under the clamping effect of the transistor voltages, the first parallel capacitor Cd1 and the second parallel capacitor Cd2 no longer participate in resonance, and the leakage inductance Lr, the magnetizing inductance Lm, the first resonant capacitor Cr1 and the second resonant capacitor Cr2 simultaneously participate in resonance.

At the time instant t2, the first switch transistor Q1 is turned off, and the second switch transistor Q2 is turned on at zero voltage. At this time, the second switch transistor Q2 and the fourth switch transistor Q4 are in the on state.

During the stage from t2 to t3, the input direct-current source Vg does not input a current to the phase-shifted full-bridge converter. During this time period, the leakage inductance Lr freewheels to provide the current for the phase-shifted full-bridge converter. The primary-side current of the transformer flows forward through the leakage inductance Lr, the transformer, the fourth switch transistor Q4, and a body diode of the second switch transistor Q2, and the current continuously decreases, with the current flow direction shown in FIG. 6. The first transistor D1 remains in the off state, the voltage of the first parallel capacitor Cd1 is the output voltage Um, the voltage of the second parallel capacitor Cd2 is zero, and the second transistor D2 remains in the on state. The voltage of the first resonant capacitor Cr1 continuously decreases, the first resonant capacitor Cr1 discharges, the voltage of the second resonant capacitor Cr2 continuously increases, and the second resonant capacitor Cr2 is charged.

At the time instant t3, the primary-side current of the transformer and the current of the second transistor D2 are 0, and the second transistor D2 is turned off. The first resonant capacitor Cr1 discharges to the minimum resonant voltage, and the second resonant capacitor Cr2 is charged to the maximum resonant voltage. At the time instant t3, the fourth switch transistor Q4 is turned off at zero current, and the third switch transistor Q3 is turned on. At this time, the second switch transistor Q2 and the third switch transistor Q3 are in the on state.

In the third mode, the phase-shifted full-bridge converter outputs a current to the output direct-current source Vm, and the leakage inductance Lr, the magnetizing inductance Lm, the first resonant capacitor Cr1 and the second resonant capacitor Cr2 simultaneously participate in resonance.

During the stage from t3 to t4, the voltage of the first parallel capacitor Cd1 decreases from the output voltage Um, the first parallel capacitor Cd1 discharges, the voltage of the second parallel capacitor Cd2 increases from zero, the second parallel capacitor Cd2 is charged, and the second transistor D2 enters the off state. The primary-side current of the transformer flows in reverse and continuously increases, the voltage of the first resonant capacitor Cr1 increases from the minimum resonant voltage, the first resonant capacitor Cr1 is charged, the voltage of the second resonant capacitor Cr2 decreases from the maximum resonant voltage, and the second resonant capacitor Cr2 discharges.

At the time instant t4, the voltage of the first parallel capacitor Cd1 discharges to 0, the first transistor D1 is turned on, and the voltage of the second parallel capacitor Cd2 is charged to the output voltage Um.

During the stage from t4 to t5, the first transistor D1 remains in the on state, the voltage of the first parallel capacitor Cd1 is zero, the voltage of the second parallel capacitor Cd2 is the output voltage Um, and the second transistor D2 remains in the off state. The voltage of the first resonant capacitor Cr1 continuously increases, the first resonant capacitor Cr1 is charged, the voltage of the second resonant capacitor Cr2 continuously decreases, and the second resonant capacitor Cr2 discharges.

At the time instant t5, the first switch transistor Q1 is turned on at zero voltage, and the second switch transistor Q2 is turned off. At this time, the first switch transistor Q1 and the third switch transistor Q3 are in the on state.

During the stage from t5 to t6, the primary-side current of the transformer flows in reverse, and the current continuously decreases. The first transistor D1 remains in the on state, the voltage of the first parallel capacitor Cd1 is zero, the voltage of the second parallel capacitor Cd2 is the output voltage Um, and the second transistor D2 remains in the off state. The voltage of the first resonant capacitor Cr1 continuously increases, the first resonant capacitor Cr1 is charged, the voltage of the second resonant capacitor Cr2 continuously decreases, and the second resonant capacitor Cr2 discharges.

At the time instant t6, the primary-side current of the transformer and the current of the first transistor D1 are 0, and the first transistor D1 is turned off. The first resonant capacitor Cr1 is charged to the maximum resonant voltage, and the second resonant capacitor Cr2 discharges to the minimum resonant voltage. At the time instant t6, the third switch transistor Q3 is turned off at zero current, and the fourth switch transistor Q4 is turned on. At this time, the first switch transistor Q1 and the fourth switch transistor Q4 are in the on state.

In the process where both the first transistor D1 and the second transistor D2 are turned off, and their respective parallel capacitors Cd1 and Cd2 are being charged and discharging, the phase-shifted full-bridge converter does not charge the output direct-current source Vm. During this time period (the stage from t0 to t1), the input direct-current source Vg charges the leakage inductance Lr of the transformer to store power until the charging and discharging of the parallel capacitors Cd1 and Cd2 ends. The transistors complete commutation and start to supply power to the output direct-current source Vm. At this time, since the current of the leakage inductance Lr cannot change abruptly, an induced electromotive force is generated to maintain the original current, and the input direct-current source Vg is superimposed to simultaneously supply power to the transformer, thereby achieving the capability of increasing the input voltage range and improving the boost ratio of the topology.

Based on the above control method, the input current Iin may be obtained through the resonant devices of the phase-shifted full-bridge converter, i.e., the leakage inductance Lr, the magnetizing inductance Lm, the first parallel capacitor Cd1, the second parallel capacitor Cd2, the first resonant capacitor Cr1, and the second resonant capacitor Cr2, the turns ratio n of the transformer, the input voltage Ug, the output voltage Um, the operation cycle T, and an effective turn-on duration ton. $Iin = I 1 \left(Ug, Um, Lr, Lm, n, Cd, Cr, T, ton\right)$

It should be noted that for a specific hardware structure, the leakage inductance Lr, the magnetizing inductance Lm, the first parallel capacitor Cd1, the second parallel capacitor Cd2, the first resonant capacitor Cr1, the second resonant capacitor Cr2, and the turns ratio n of the transformer are constants. Therefore, the above equation may be simplified to: $Iin = I 2 \left(Ug, Um, T, ton\right)$

Furthermore, an input power Pin may be obtained through Pin=Iin*Ug.

Based on the above soft-switching ZCS control operation mode of the lagging bridge arm, the effective turn-on duration ton (a total duration of the first mode and the second mode), i.e., a total duration of the first duration plus the second duration, may be derived by: $ton = ton 1 \left(Um/Ug, Lr, Lm, Cd, Cr, n, T\right) .$

Similarly, for a specific hardware structure, the leakage inductance Lr, the magnetizing inductance Lm, the first parallel capacitor Cd1, the second parallel capacitor Cd2, the first resonant capacitor Cr1, the second resonant capacitor Cr2, and the turns ratio n of the transformer are constants. Therefore, the above equation may be simplified to: $ton = ton 2 \left(Um/Ug, T\right) .$

A phase-shift duration tps (a duration of the third mode), i.e., the third duration is obtained by: $tps = T / 2 - ton = tps \left(Um/Ug, T\right) .$

It can be seen that the embodiment of the present disclosure may further include:
determining the phase-shift duration tps based on the operation cycle T and the effective turn-on duration ton, where
the effective turn-on duration ton is determined based on the input voltage Ug, the output voltage Um, an inductance value of the leakage inductance Lr, an inductance value of the magnetizing inductance Lm, the turns ratio of the transformer, a capacitance of the first parallel capacitor Cd1, a capacitance of the second parallel capacitor Cd2, a capacitance of the first resonant capacitor Cr1, a capacitance of the second resonant capacitor Cr2, and the operation cycle T.

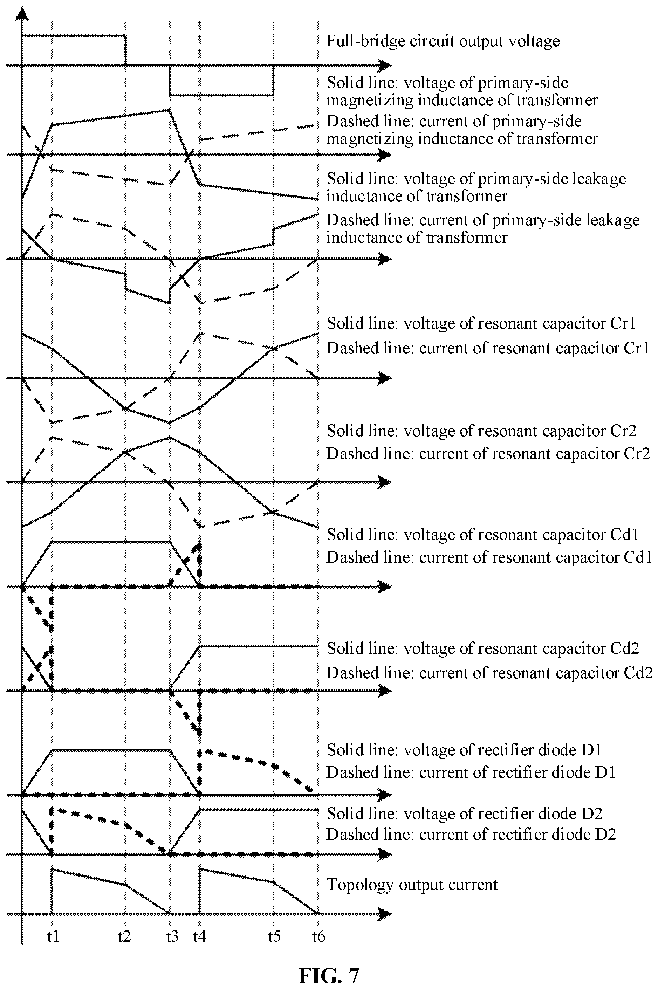

Reference is made to FIG. 7, which illustrates a waveform schematic diagram of the voltage and/or current of each device of the phase-shifted full-bridge converter provided by the embodiments of the present disclosure. In the embodiments of the present disclosure, the capacitance of the first parallel capacitor Cd1 and the capacitance of the second parallel capacitor Cd2 may be the same, and the capacitance of the first resonant capacitor Cr1 and the capacitance of the second resonant capacitor Cr2 may be the same. A sum of the voltage of the first resonant capacitor Cr1 and the voltage of the second resonant capacitor Cr2 is always equal to the output voltage Um, and the currents of the first resonant capacitor Cr1 and the second resonant capacitor Cr2 are always equal in magnitude and opposite in direction. Since the first parallel capacitor Cd1 is connected in parallel with the first transistor D1, voltage curves of the first parallel capacitor Cd1 and the first transistor D1 are exactly the same. Since the second parallel capacitor Cd2 is connected in parallel with the second transistor D2, voltage curves of the second parallel capacitor Cd2 and the second transistor D2 are exactly the same. The output voltage is constant at Um, and an output current varies with the mode.

According to the embodiments of the present disclosure, the input voltage range of the phase-shifted full-bridge converter is expanded, so that the phase-shifted full-bridge converter operates with more direct-current power sources, for example, more photovoltaic modules of different voltages. Moreover, the boost ratio of the phase-shifted full-bridge converter is improved, so that a bus voltage of the phase-shifted full-bridge converter is increased, making it more adaptable to different alternating-current grid voltages. The efficiency of the phase-shifted full-bridge converter is improved, thereby reducing the power consumption of the phase-shifted full-bridge converter and reducing power loss.

Next, a control apparatus for a phase-shifted full-bridge converter is described according to the present disclosure. The control apparatus for a phase-shifted full-bridge converter described below and the control method for a phase-shifted full-bridge converter described above may be referred to correspondingly.

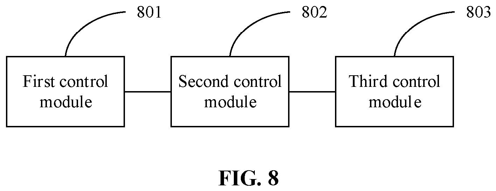

Reference is made to FIG. 8, which is a schematic structural diagram of a control apparatus for a phase-shifted full-bridge converter according to the present disclosure. The phase-shifted full-bridge converter includes a first switch transistor, a second switch transistor, a third switch transistor, a fourth switch transistor, a transformer, a first transistor, a second transistor, a first parallel capacitor, a second parallel capacitor, a first resonant capacitor and a second resonant capacitor. An initial state of the first switch transistor and an initial state of the fourth switch transistor in each operation cycle of the phase-shifted full-bridge converter are on, and an initial state of the second switch transistor and an initial state of the third switch transistor in each operation cycle of the phase-shifted full-bridge converter are off.

The control apparatus includes:
a first control module 801, configured to control the first switch transistor and the fourth switch transistor to be on for a first duration, to enable that an input direct-current source outputs a current to the phase-shifted full-bridge converter, a first resonant cavity stores power, the first resonant capacitor discharges, and the second resonant capacitor is charged, where the first resonant cavity includes a leakage inductance of the transformer, a magnetizing inductance of the transformer, the first parallel capacitor, the second parallel capacitor, the first resonant capacitor, and the second resonant capacitor;
a second control module 802, configured to control the first switch transistor and the fourth switch transistor to continue to be on for a second duration, to enable that the input direct-current source outputs a current to an output direct-current source through the phase-shifted full-bridge converter, and the first parallel capacitor and the second parallel capacitor stop resonating; and
a third control module 803, configured to control the first switch transistor to be off, and control the second switch transistor and the fourth switch transistor to be on for a third duration, to enable that a second resonant cavity releases power until the first resonant capacitor discharges to a minimum resonant voltage and the second resonant capacitor is charged to a maximum resonant voltage, where the second resonant cavity includes the leakage inductance, the magnetizing inductance, the first resonant capacitor, and the second resonant capacitor.

In an embodiment of the present disclosure, the control apparatus further includes:
a fourth control module, configured to control the fourth switch transistor to be off, and control the second switch transistor and the third switch transistor to be on for a fourth duration, to enable that the input direct-current source outputs a current to the phase-shifted full-bridge converter, the first resonant cavity stores power, the first resonant capacitor is charged, and the second resonant capacitor discharges;
a fifth control module, configured to control the second switch transistor and the third switch transistor to continue to be on for a fifth duration, to enable that the input direct-current source outputs a current to the output direct-current source through the phase-shifted full-bridge converter, and the first parallel capacitor and the second parallel capacitor stop resonating; and
a sixth control module, configured to control the second switch transistor to be off, and control the first switch transistor and the third switch transistor to be on for a sixth duration, to enable that the second resonant cavity releases power until the first resonant capacitor is charged to the maximum resonant voltage and the second resonant capacitor discharges to the minimum resonant voltage.

In an embodiment of the present disclosure, the apparatus further includes:
a phase-shift duration determination module, configured to determine a phase-shift duration of the phase-shifted full-bridge converter based on the operation cycle and an effective turn-on duration of the phase-shifted full-bridge converter.

In an embodiment of the present disclosure, the apparatus further includes:
an effective turn-on duration determination module, configured to determine the effective turn-on duration of the phase-shifted full-bridge converter based on an input voltage of the phase-shifted full-bridge converter, an output voltage of the phase-shifted full-bridge converter, an inductance value of the leakage inductance, an inductance value of the magnetizing inductance, a turns ratio of the transformer, a capacitance of the first parallel capacitor, a capacitance of the second parallel capacitor, a capacitance of the first resonant capacitor, a capacitance of the second resonant capacitor, and the operation cycle.

In an embodiment of the present disclosure, the first switch transistor, the second switch transistor, the third switch transistor, and the fourth switch transistor are metal-oxide-semiconductor field-effect transistors each having a body diode and a parasitic capacitance.

In an embodiment of the present disclosure, a computer device is further provided, including: a memory and a processor, where
the memory is configured to store a computer program; and
the processor is configured to execute the computer program in the memory to implement the method described in the above method embodiments.

In an embodiment of the present disclosure, a computer-readable storage medium is further provided. The computer-readable storage medium stores instructions, and the instructions, when executed on a computer, cause the computer to execute the method described in the above method embodiments.

In the embodiments of the present disclosure, the first control module controls the first switch transistor and the fourth switch transistor of the phase-shifted full-bridge converter to be on for the first duration, so that the input direct-current source outputs a current to the phase-shifted full-bridge converter, the first resonant cavity stores power, the first resonant capacitor discharges, and the second resonant capacitor is charged. The second control module controls the first switch transistor and the fourth switch transistor to continue to be on for the second duration, so that the input direct-current source outputs a current to the output direct-current source through the phase-shifted full-bridge converter, and the first parallel capacitor and the second parallel capacitor stop resonating. The third control module controls the first switch transistor to be off, and controls the second switch transistor and the fourth switch transistor of the phase-shifted full-bridge converter to be on for the third duration, so that the second resonant cavity releases power until the first resonant capacitor discharges to the minimum resonant voltage, and the second resonant capacitor is charged to the maximum resonant voltage. In the embodiments of the present disclosure, the resonant cavity including the first parallel capacitor and the second parallel capacitor is adopted to store power. When the first parallel capacitor and the second parallel capacitor stop resonating, the resonant cavity is adopted to release power. When releasing power, the resonant cavity superimposes the input voltage and supplies power to the transformer simultaneously, which can increase the input voltage range, improve the boost ratio of the phase-shifted full-bridge converter, and address the issue of reducing the conversion efficiency of the phase-shifted full-bridge converter due to increasing the turns ratio of the transformer.

It should be noted that for the same and similar parts among the various embodiments, reference may be made to each other. For the apparatus embodiments and system embodiments, since they are basically similar to the method embodiments, the description is relatively simple. For relevant parts, reference is made to the description of the method embodiments.

For the sake of simple description, the aforementioned various embodiments are all expressed as a series of step combinations. However, those skilled in the art should be aware that the present disclosure is not limited by the sequence of the steps, because according to the present disclosure, some steps may be performed in other sequences or simultaneously. Secondly, those skilled in the art should also be aware that the embodiments described in the specification are all preferred embodiments, and the steps and modules involved are not necessarily all required by the present disclosure.

Finally, it should also be noted that in this text, relational terms such as first and second, etc., are only used to distinguish one entity or operation from another entity or operation, and do not necessarily require or imply any such actual relationship or order between these entities or operations. Moreover, the terms "include", "contain" or any other variant thereof are intended to cover non-exclusive inclusion, so that a process, method, article or device including a series of elements not only includes those elements, but also includes other elements not explicitly listed, or also includes elements inherent to such a process, method, article or device. Without more restrictions, an element defined by the sentence "includes a ..." does not exclude the existence of other identical elements in the process, method, article or device that includes the elements.

The above description of the disclosed embodiments enables those skilled in the art to implement or use the present disclosure. Various modifications to these embodiments will be apparent to those skilled in the art, and the general principles defined herein can be implemented in other embodiments without departing from the spirit or scope of the present disclosure. Therefore, the present disclosure will not be limited to these embodiments shown herein, but should conform to the widest scope consistent with the principles and novel features disclosed herein.

The above are only preferred implementations of the present disclosure. It should be pointed out that for those ordinarily skilled in the technical field, without departing from the principles of the present disclosure, several improvements and modifications can be made, and these improvements and modifications should also be regarded as the protection scope of the present disclosure.

## Claims

1. A control method for a phase-shifted full-bridge converter, wherein the phase-shifted full-bridge converter comprises a first switch transistor, a second switch transistor, a third switch transistor, a fourth switch transistor, a transformer, a first transistor, a second transistor, a first parallel capacitor, a second parallel capacitor, a first resonant capacitor, and a second resonant capacitor, an initial state of the first switch transistor and an initial state of the fourth switch transistor in each operation cycle of the phase-shifted full-bridge converter are on, and an initial state of the second switch transistor and an initial state of the third switch transistor in each operation cycle of the phase-shifted full-bridge converter are off, and
wherein the control method comprises:
controlling the first switch transistor and the fourth switch transistor to be on for a first duration, to enable that an input direct-current source outputs a current to the phase-shifted full-bridge converter, a first resonant cavity stores power, the first resonant capacitor discharges, and the second resonant capacitor is charged, wherein the first resonant cavity comprises a leakage inductance of the transformer, a magnetizing inductance of the transformer, the first parallel capacitor, the second parallel capacitor, the first resonant capacitor, and the second resonant capacitor;
controlling the first switch transistor and the fourth switch transistor to continue to be on for a second duration, to enable that the input direct-current source outputs a current to an output direct-current source through the phase-shifted full-bridge converter, and the first parallel capacitor and the second parallel capacitor stop resonating; and
controlling the first switch transistor to be off, and controlling the second switch transistor and the fourth switch transistor to be on for a third duration, to enable that a second resonant cavity releases power until the first resonant capacitor discharges to a minimum resonant voltage and the second resonant capacitor is charged to a maximum resonant voltage, wherein the second resonant cavity comprises the leakage inductance, the magnetizing inductance, the first resonant capacitor, and the second resonant capacitor.

2. The control method according to claim 1, wherein after controlling the first switch transistor to be off, and controlling the second switch transistor and the fourth switch transistor to be on for the third duration, the control method further comprises:
controlling the fourth switch transistor to be off, and controlling the second switch transistor and the third switch transistor to be on for a fourth duration, to enable that the input direct-current source outputs a current to the phase-shifted full-bridge converter, the first resonant cavity stores power, the first resonant capacitor is charged, and the second resonant capacitor discharges;
controlling the second switch transistor and the third switch transistor to continue to be on for a fifth duration, to enable that the input direct-current source outputs a current to the output direct-current source through the phase-shifted full-bridge converter, and the first parallel capacitor and the second parallel capacitor stop resonating; and
controlling the second switch transistor to be off, and controlling the first switch transistor and the third switch transistor to be on for a sixth duration, to enable that the second resonant cavity releases power until the first resonant capacitor is charged to the maximum resonant voltage and the second resonant capacitor discharges to the minimum resonant voltage.

3. The control method according to claim 1 or 2, further comprising:
determining a phase-shift duration of the phase-shifted full-bridge converter based on the operation cycle and an effective turn-on duration of the phase-shifted full-bridge converter.

4. The control method according to claim 1 or 2, further comprising:
determining an effective turn-on duration of the phase-shifted full-bridge converter based on an input voltage of the phase-shifted full-bridge converter, an output voltage of the phase-shifted full-bridge converter, an inductance value of the leakage inductance, an inductance value of the magnetizing inductance, a turns ratio of the transformer, a capacitance of the first parallel capacitor, a capacitance of the second parallel capacitor, a capacitance of the first resonant capacitor, a capacitance of the second resonant capacitor, and the operation cycle.

5. The control method according to claim 1 or 2, wherein the first switch transistor, the second switch transistor, the third switch transistor, and the fourth switch transistor are metal-oxide-semiconductor field-effect transistors each having a body diode and a parasitic capacitance.

6. A control apparatus for a phase-shifted full-bridge converter, wherein the phase-shifted full-bridge converter comprises a first switch transistor, a second switch transistor, a third switch transistor, a fourth switch transistor, a transformer, a first transistor, a second transistor, a first parallel capacitor, a second parallel capacitor, a first resonant capacitor, and a second resonant capacitor, an initial state of the first switch transistor and an initial state of the fourth switch transistor in each operation cycle of the phase-shifted full-bridge converter are on, and an initial state of the second switch transistor and an initial state of the third switch transistor in each operation cycle of the phase-shifted full-bridge converter are off, and
wherein the control apparatus comprises:
a first control module, configured to control the first switch transistor and the fourth switch transistor to be on for a first duration, to enable that an input direct-current source outputs a current to the phase-shifted full-bridge converter, a first resonant cavity stores power, the first resonant capacitor discharges, and the second resonant capacitor is charged, wherein the first resonant cavity comprises a leakage inductance of the transformer, a magnetizing inductance of the transformer, the first parallel capacitor, the second parallel capacitor, the first resonant capacitor, and the second resonant capacitor;
a second control module, configured to control the first switch transistor and the fourth switch transistor to continue to be on for a second duration, to enable that the input direct-current source outputs a current to an output direct-current source through the phase-shifted full-bridge converter, and the first parallel capacitor and the second parallel capacitor stop resonating; and
a third control module, configured to control the first switch transistor to be off, and control the second switch transistor and the fourth switch transistor to be on for a third duration, to enable that a second resonant cavity releases power until the first resonant capacitor discharges to a minimum resonant voltage and the second resonant capacitor is charged to a maximum resonant voltage, wherein the second resonant cavity comprises the leakage inductance, the magnetizing inductance, the first resonant capacitor, and the second resonant capacitor.

7. The control apparatus according to claim 6, further comprising:
a fourth control module, configured to control the fourth switch transistor to be off, and control the second switch transistor and the third switch transistor to be on for a fourth duration, to enable that the input direct-current source outputs a current to the phase-shifted full-bridge converter, the first resonant cavity stores power, the first resonant capacitor is charged, and the second resonant capacitor discharges;
a fifth control module, configured to control the second switch transistor and the third switch transistor to continue to be on for a fifth duration, to enable that the input direct-current source outputs a current to the output direct-current source through the phase-shifted full-bridge converter, and the first parallel capacitor and the second parallel capacitor stop resonating; and
a sixth control module, configured to control the second switch transistor to be off, and control the first switch transistor and the third switch transistor to be on for a sixth duration, to enable that the second resonant cavity releases power until the first resonant capacitor is charged to the maximum resonant voltage and the second resonant capacitor discharges to the minimum resonant voltage.

8. The control apparatus according to claim 6 or 7, further comprising:
a phase-shift duration determination module, configured to determine a phase-shift duration of the phase-shifted full-bridge converter based on the operation cycle and an effective turn-on duration of the phase-shifted full-bridge converter.

9. A computer device, comprising a memory and a processor, wherein
the memory is configured to store a computer program; and
the processor is configured to execute the computer program in the memory to implement the control method according to any one of claims 1 to 5.

10. A computer-readable storage medium, storing instructions, wherein the instructions, when executed on a computer, cause the computer to implement the control method according to any one of claims 1 to 5.
